Europäisches Patentamt

European Patent Office

Office européen des brevets

(19)

(11) **EP 1 458 587 B1**

(12) **EUROPÄISCHE PATENTSCHRIFT**

(45) Veröffentlichungstag und Bekanntmachung des Hinweises auf die Patenterteilung:
**09.11.2005 Patentblatt 2005/45**

(21) Anmeldenummer: **02792598.1**

(22) Anmeldetag: **13.11.2002**

(51) Int Cl.⁷: **B60K 41/00**, B60K 28/16, B60K 6/04

(86) Internationale Anmeldenummer:
**PCT/DE2002/004194**

(87) Internationale Veröffentlichungsnummer:
**WO 2003/055713 (10.07.2003 Gazette 2003/28)**

(54) **VERFAHREN UND EINRICHTUNG ZUR REGELUNG DES ANTRIEBSMOMENTES NACH EINEM LASTWECHSEL BEI HYBRIDFAHRZEUGEN**

METHOD AND DEVICE FOR REGULATION OF THE TORQUE AFTER A CHANGE IN LOAD FOR HYBRID VEHICLES

PROCEDE ET DISPOSITIF DE REGULATION DU COUPLE MOTEUR APRES UN CHANGEMENT DE CHARGE SUR DES VEHICULES HYBRIDES

(84) Benannte Vertragsstaaten:
**DE FR IT**

(30) Priorität: **21.12.2001 DE 10163208**

(43) Veröffentlichungstag der Anmeldung:
**22.09.2004 Patentblatt 2004/39**

(73) Patentinhaber: **ROBERT BOSCH GMBH**
**70442 Stuttgart (DE)**

(72) Erfinder: **MAIER-LANDGREBE, Rolf**
**71394 Kernen (DE)**

(74) Vertreter: **Gleiss & Grosse**
**Patentanwälte**
**Leitzstrasse 45**
**70469 Stuttgart (DE)**

(56) Entgegenhaltungen:
**EP-A- 1 110 785**     **US-A1- 2002 105 188**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Regelung des Antriebsmomentes nach einem Lastwechsel bei Hybridfahrzeugen, bei dem auf das Antriebsmoment bei einem Lastwechsel Einfluss genommen wird, indem einem aus dem Lastwechsel resultierenden Bremsschlupf an den Antriebsrädern des Hybridfahrzeuges bereits in der Phase seiner Entstehung entgegengewirkt wird, derart, dass eine Auswirkung auf die Seitenführung und damit auf die Stabilität des Hybridfahrzeuges beim Fahren ausgeschaltet wird, sowie eine Einrichtung zur Durchführung des Verfahrens zur Regelung des Antriebsmomentes nach einem Lastwechsel.

Stand der Technik

Bei Kraftfahrzeugen können die Antriebsräder infolge eines Lastwechsels wegen des Motorschleppmomentes in Bremsschlupf geraten. Die Seitenführung des Kraftfahrzeuges nimmt dadurch ab und das Kraftfahrzeug wird instabil. Daher ist es erforderlich, den Bremsschlupf möglichst schnell abzubauen. Um dieses zu erreichen, ist es allgemein bekannt, durch eine Motorschleppmomentregelung das Motormoment automatisch so zu regeln, dass der Bremsschlupf schnellstmöglich wieder verschwindet. Trotzdem vergeht bei herkömmlichen Kraftfahrzeugen mit Benzinmotor eine relativ große Zeit, bis sich die von der Motorschleppmomentregelung angeforderte Erhöhung des Motormomentes an den Antriebsrädern auswirkt, was daraus resultiert, dass zuerst die Öffnung der Drosselklappe und danach die Luft-Ansaugung mit einer Zeitverzögerung verbunden ist.

Um eine Abnahme der Seitenführung des Kraftfahrzeuges zu verhindern, so dass die Stabilität des Kraftfahrzeuges erhalten bleibt, kommen bei Kraftfahrzeugen aber auch Antriebsschlupfregelungen, wie sie beispielsweise gemäß dem "Kraftfahrtechnischen Taschenbuch", Robert Bosch GmbH, Düsseldorf, 21. Auflage, 1991, Seite 555-559 bekannt sind, zur Anwendung, durch die ein Durchdrehen der Antriebsräder verhindert und der Antriebsschlupf auf zulässige Werte geregelt wird. Dabei erfolgt die Regelung des Antriebsschlupfes, indem beispielsweise beim Erreichen eines Grenzwertes des Antriebsschlupfes das Antriebsmoment verringert wird, was durch Verstellung des Zündzeitpunktes oder des Verbrennungsmotors oder aber durch andere an sich bekannte Maßnahmen erreicht werden kann. Unabhängig davon, wie bei den bekannten Antriebsschlupfregelungen beim Erreichen eines Grenzwertes des Antriebsschlupfes das Antriebsmoment verringert wird, sind die bekannten Antriebsschlupfregelungen stets mit dem Nachteil behaftet, dass die Antriebsschlupfregelung nicht nur unzureichend steuerbar ist, sondern die Motorverstellung stets mit einem erheblichen Zeitfaktor verbunden ist, so dass insgesamt ein bestimmter zeitlicher Verlauf der Antriebsmomentverringerung nicht erreicht wird.

Gemäß der DE 195 49 259 A1 ist auch schon ein System zur Antriebsschlupfregelung für Hybridfahrzeuge bekannt, durch das die Nachteile, die den bei herkömmlichen Kraftfahrzeugen zur Anwendung kommenden Antriebsschlupfregelungen anhaften, vermieden werden. Dieses wird durch ein Antriebssystem mit einer Antriebsschlupfregelung erreicht; bei dem die elektrische Maschine derart ausgelegt ist, dass mit ihr eine Antriebsschlupfverringerung durch Verkleinerung des Antriebsmomentes des Antriebsaggregates herbeigeführt wird, was durch Bremswirkung und/oder bei als Kupplung wirkender elektrischer Maschine durch Kupplungsschlupfwirkung erreicht wird. Dabei wird die Antriebsschlupfregelung erst dann aktiv, wenn ein Überschreiten eines Grenzwertes des Antriebsschlupfes erfolgt. Liegt nun eine hieraus resultierende Bedingung vor, wird bei diesem System zur Antriebsschlupfregelung mittels der elektrischen Maschine das auf die Antriebsräder wirkende Antriebsmoment verringert.

Die EP-A-1 110 785 offenbart ein Verfahren, mit dem einem Schlupf der von einem Verbrennungsmotor angetriebenen Achse eines Hybridfahrzeugs frühzeitig entgegengewirkt werden kann. Bei diesem Verfahren handelt es sich um eine Antriebsschlupfregelung, mit der ein Durchdrehen der Antriebsräder zum Beispiel beim Losfahren auf glattem oder Körnigem Untergrund beim Losfahren auf glattem oder Körnigem Untergrund infolge eines zu hohen Antriebsmoments verhindert werden soll, indem die Räder der anderen Achse von dem Elektromotor angetrieben werden, um das erforderliche Antriebsmoment besser zu verteilen.

Vorteile der Erfindung

Durch die Erfindung wird ein Verfahren sowie eine Einrichtung zur Regelung des Antriebsmomentes nach einem Lastwechsel bei Hybridfahrzeugen geschaffen, indem sowohl durch das Verfahren als auch durch die Einrichtung das Antriebsmoment möglichst schnell dann erhöht wird, wenn die Antriebsräder infolge eines Lastwechsels Bremsschlupf aufweisen, so dass auch bei einem Lastwechsel die Seitenführung des Hybridfahrzeuges erhalten bleibt und somit das Hybridfahrzeug seine Stabilität beim Fahren beibehält.

Diese Vorteile werden durch ein Verfahren gemäß Anspruch 1 erreicht, bei dem beim Auftreten eines Bremsschlupfes an den Antriebsrädern infolge eines Lastwechsels ein möglichst hoher Anteil des Antriebsmoments dieser Antreibsräder über den oder die Elektromotoren des Hybridfahrzeuges aufgebracht wird. Dabei wird in Durchführung des Verfahrens nach Detektierung von Bremsschlupf nach einem Lastwechsel das Soll-Antriebsmoment errechnet und dieses einer Antriebssteuerung vorgegeben, in der durch einen Algorithmus für die Betriebsstrategie das Sollmoment für den Verbrennungsmotor und das Sollmoment des oder der Elektromotoren bestimmt wird und die das Sollmoment des oder der Elektromotoren gleich dem Soll-Antriebsmoment setzt, wenn das Soll-Antriebsmoment kleiner oder gleich dem im aktuellen Betriebspunkt maximal möglichen Antriebsmoment des oder der Elektromotoren ist. Voraussetzung für die Gleichsetzung des Sollmomentes des oder der Elektromotoren mit dem Soll-Antriebsmoment ist stets, dass eine Abfragung des Ladezustandes der Batterie ergeben hat, dass diese ausreichend geladen ist.

Ist die Bedingung, wonach das Soll-Antriebsmoment kleiner oder gleich dem im aktuellen Betriebspunkt maximal möglichen Antriebsmoment des oder der Elektromotoren ist, nicht erfüllt, so wird in weiterer Ausbildung des erfindungsgemäßen Verfahrens durch den Verbrennungsmotor der Anteil des Antriebsmomentes aufgebracht, der über das maximal mögliche Antriebsmoment des oder der Elektromotoren hinausgeht. Um dieses zu erreichen, um also den Anteil des Antriebsmomentes durch den Verbrennungsmotor aufzubringen, der über das maximal mögliche Antriebsmoment des oder der Elektromotoren hinausgeht, werden der oder die Elektromotoren derart angesteuert, dass das diesen zugeordnete Sollmoment gleich dem im aktuellen Betriebspunkt maximal möglichen Antriebsmoment des oder der Elektromotoren ist, während der Verbrennungsmotor derart angesteuert wird, dass das diesem zugeordnete Sollmoment gleich dem Soll-Antriebsmoment abzüglich dem im aktuellen Betriebspunkt maximal möglichen Antriebsmoment des oder der Elektromotoren ist. Hierdurch wird erreicht, dass ein möglichst hoher Anteil des erforderlichen Antriebsmomentes schnellstmöglichst von dem beziehungsweise den Elektromotoren aufgebracht wird, die ein Antriebsmoment wesentlich schneller als ein Verbrennungsmotor erzeugen.

Ausgehend davon, dass die Ansprechzeit des oder der Elektromotoren dann sehr kurz ist, wenn sie bereits erregt sind, werden in Durchführung des erfindungsgemäßen Verfahrens der oder die Elektromotoren bereits bei Beginn des Lastwechsels voll erregt, indem ihr Vorhaltewert gleich dem im aktuellen Betriebspunkt maximal möglichen Antriebsmoment des oder der Elektromotoren gesetzt wird. Falls dann die Motorschleppmomentregelung eine Erhöhung des Antriebsmomentes vorgibt, muss nicht erst die Erregung des oder der Elektromotoren aufgebaut werden. Dabei ist zu berücksichtigen, dass ein Lastwechsel beispielsweise daran erkannt wird, dass der Fahrpedalwert rasch abnimmt oder dass ein Getriebe-Schaltvorgang ausgelöst wird.

Die Detektierung von Bremsschlupf nach einem Lastwechsel, nach der das Soll-Antriebsmoment errechnet und der Antriebssteuerung vorgegeben wird, erfolgt auf der Grundlage von Informationen, die aus den den Geschwindigkeiten der Antriebsräder zugeordneten Signalen resultieren.

Die durch die Erfindung beabsichtigten Wirkungen werden bei Anwendung des erfindungsgemäßen Verfahrens nicht nur bei Hybridfahrzeugen mit Zweiradantrieb erzielt, sondern auch bei Hybridfahrzeugen mit Allradantrieb.

Zur Durchführung des erfindungsgemäßen Verfahrens ist eine Einrichtung gemäß Anspruch 9 vorgesehen, bei der jedem der Antriebsräder ein die Geschwindigkeit der Antriebsräder erfassender Raddrehzahlsensor zugeordnet ist, wobei die Raddrehzahlsensoren mit einer Radregelung derart in Wirkverbindung stehen, dass durch diese nach einem Lastwechsel Bremsschlupf detektierbar ist, wenn die Radregelung über von den Raddrehzahlsensoren erzeugte Signale Informationen über einen Bremsschlupf erhält, wobei durch die Radregelung das Soll-Antriebsmoment des Hybridfahrzeuges errechenbar ist, das sie einer Antriebssteuerung vorgibt, in der durch einen Algorithmus für die Betriebsstrategie sowohl das Sollmoment für den Verbrennungsmotor als auch das Sollmoment für den oder die Elektromotoren bestimmbar ist, wobei beim Auftreten eines Bremsschlupfes an den Antriebsrädern infolge eines Lastwechsels ein möglichst hoher Anteil des Antriebsmoments dieser Antriebsräder über den oder die Elektromotoren des Hybridfahrzeuges aufgebracht wird.

Bei dieser Einrichtung ist durch die Antriebssteuerung nach Abfragung des Ladezustandes der Batterie und ermitteltem ausreichenden Ladezustand das Sollmoment des oder der Elektromotoren gleich dem Soll-Antriebsmoment $M_{MSR}{}^{x}$ setzbar, wenn

$$M_{MSR}{}^{x} \leq M_{EM\_Max}$$

ist, wobei $M_{EM\_Max}$ das im aktuellen Betriebspunkt maximal mögliche Antriebsmoment des oder der Elektromotoren ist.

Ist die Bedingung

$$M_{MSR}{}^{x} \leq M_{EM\_Max}$$

nicht erfüllt, so sind durch die Antriebssteuerung der Einrichtung der oder die Elektromotoren derart ansteuerbar, dass ihr Sollmoment gleich dem im aktuellen Betriebspunkt maximal möglichen Antriebsmoment ist und der Verbrennungsmotor derart ansteuerbar ist, dass sein Sollmoment

$$M_{VM}{}^{x} = M_{MSR}{}^{x} - M_{EM\_Max}$$

ist.

Durch die Einrichtung wird gewährleistet, dass der oder die Elektromotoren zu Beginn eines Lastwechsels voll erregbar sind, indem ihr Vorhaltewert

$$M_{EMVor}{}^{x} = M_{EM\_Max}$$

setzbar ist, so dass die Ansprechzeit des oder der Elektromotoren sehr kurz ist.

Zeichnung

Die Erfindung wird nachfolgend in einem Ausführungsbeispiel anhand der zugehörigen Zeichnung, die ein Blockdiagramm einer Einrichtung zur Realisierung des Verfahrens zur Regelung des Antriebsmomentes nach einem Lastwechsel bei Hybridfahrzeugen zeigt, näher erläutert.

Beschreibung des Ausführungsbeispieles

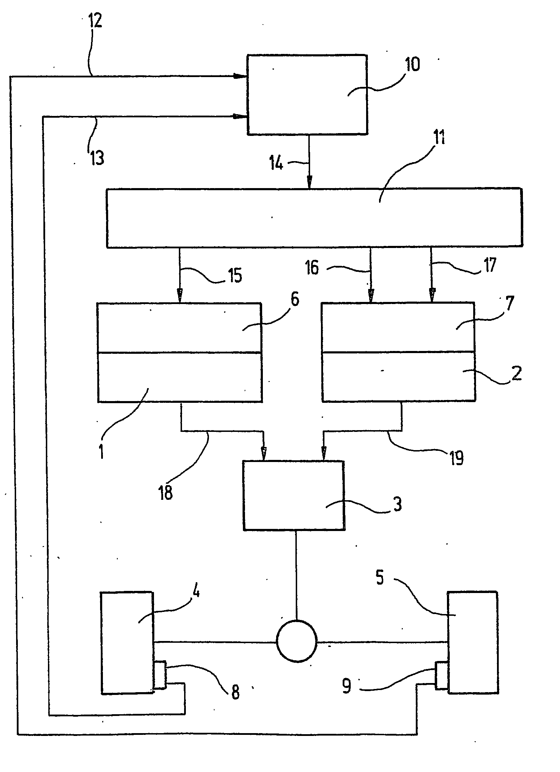

In dem in der Zeichnung dargestellten Blockdiagramm wird von einem Hybridfahrzeug mit Zweiradantrieb ausgegangen, bei dem neben dem Verbrennungsmotor 1 ein Elektromotor 2 vorgesehen ist. Sowohl der Verbrennungsmotor 1 als auch der Elektromotor 2 stehen über ein Getriebe 3 mit den Antriebsrädern 4, 5 des Hybridfahrzeuges in Wirkverbindung. Dabei ist dem Verbrennungsmotor 1 eine Motorsteuerung 6 und dem Elektromotor 2 ein Umrichter 7 zugeordnet. Der Verbrennungsmotor 1 bringt ein Moment $M_{VM}$ (Signal 18) und der Elektromotor 2 bringt ein Moment $M_{EM}$ (Signal 19) in den Antriebsstrang ein.

Um bei diesem Hybridfahrzeug das Antriebsmoment möglichst schnell dann zu erhöhen, wenn die Antriebsräder 4, 5 infolge eines Lastwechsels Bremsschlupf aufweisen, um also bei einem Lastwechsel die Seitenführung des Hybridfahrzeuges zu erhalten, und damit das Hybridfahrzeug seine Stabilität beim Fahren auch beibehält, wird bei diesem Hybridfahrzeug beim Auftreten eines Bremsschlupfes an den Antriebsrädern 4, 5 infolge eines Lastwechsels das Antriebsmoment über den Elektromotor 2 aufgebracht.

Wesentliche Bausteine der Einrichtung zur Regelung des Antriebsmomentes nach einem Lastwechsel des Hybridfahrzeuges sind gemäß der Zeichnung den Antriebsrädern 4, 5 zugeordnete, die Geschwindigkeit der Antriebsrädern 4, 5 erfassende Raddrehzahlsensoren 8, 9, eine Radregelung - ESP, ABSR - 10 und eine Antriebssteuerung 11. Dabei stehen die Raddrehzahlsensoren 8, 9 derart mit der Radregelung 10 in Wirkverbindung, dass durch diese nach einem Lastwechsel Bremsschlupf detektiert wird, wenn die Radregelung 10 über von den Raddrehzahlsensoren 8, 9 erzeugte Signale 12 $n_{Rad\text{-}links}$ und 13 $n_{Rad\text{-}rechts}$ Informationen über einen Bremsschlupf erhält. Hat die Radregelung 10 nach einem Lastwechsel Bremsschlupf detektiert, wird durch die Radregelung 10 das Soll-Antriebsmoment $M_{MSR}{}^x$ (Signal 14) des Hybridfahrzeuges der Antriebssteuerung 11 vorgegeben, in der durch einen Algorithmus für die Betriebsstrategie sowohl das Sollmoment $M_{VM}{}^x$ (Signal 15) für den Verbrennungsmotor 1 als auch das Sollmoment $M_{EM}{}^x$ (Signal 16) für den Elektromotor 2 bestimmt wird.

Gleichzeitig wird durch die Antriebssteuerung 11 der Ladezustand der im Blockdiagramm nicht weiter dargestellten Batterie abgefragt. Hat diese Abfragung ergeben, dass die Batterie ausreichend geladen ist, so setzt die Antriebssteuerung 11 das Sollmoment $M_{EM}{}^x$ des Elektromotors 2 gleich dem Soll-Antriebsmoment $M_{MSR}{}^x$, wenn das Soll-Antriebsmoment $M_{MSR}{}^x$ kleiner oder gleich dem im aktuellen Betriebspunkt maximal möglichen Antriebsmoment $M_{EM\_Max}$ des Elektromotors 2 ist. Wird durch die Antriebssteuerung 11 ermittelt, dass die. Bedingung

$$M_{MSR}{}^x \le M_{EM\_Max}$$

nicht erfüllt ist, so wird durch die Antriebssteuerung 11 der Elektromotor 2 derart angesteuert, dass sein Sollmoment $M_{EM}{}^x$ gleich dem im aktuellen Betriebspunkt maximal möglichen Antriebsmoment $M_{EM\_Max}$ ist. Eine Ansteuerung des Verbrennungsmotors 1 erfolgt bei Nichterfüllung der Bedingung

$$M_{MSR}{}^x \le M_{EM\_Max}$$

derart, dass das dem Verbrennungsmotor 1 zugeordnete Sollmoment $M_{VM}{}^x$ gleich dem Soll-Antriebsmoment $M_{MSR}{}^x$ abzüglich dem im aktuellen Betriebspunkt maximal möglichen Antriebsmoment $M_{EM\_Max}$ des Elektromotors 2 ist. Dadurch wird erreicht, dass der Verbrennungsmotor 1 den Anteil des Antriebsmomentes aufbringt, der über das im aktuellen Betriebspunkt maximal mögliche Antriebsmoment $M_{EM\_Max}$ des Elektromotors 2 hinausgeht, so dass ein möglichst hoher Anteil des erforderlichen Antriebsmomentes schnellstmöglich vom Elektromotor 2 aufgebracht wird.

Obwohl in der Zeichnung nicht weiter dargestellt, sollte bei Beginn eines Lastwechsels der Elektromotor 2 stets voll erregt werden, indem der Vorhaltewert $M_{EMVor}{}^x$ (Signal 17) des Sollmomentes $M_{EM}{}^x$ des Elektromotors 2 gleich dem im aktuellen Betriebspunkt maximal möglichen Antriebsmoment $M_{EM\_Max}$ gesetzt wird. Gibt die ebenfalls nicht weiter dargestellte, an sich bekannte Motorschleppmomentregelung dann eine Erhöhung des Antriebsmomentes vor, so ist es nicht erforderlich, die Erregung des Elektromotors 2 noch erst aufzubauen. Somit ist der Elektromotor 2 bereits erregt und seine Ansprechzeit sehr kurz, wenn er das Antriebsmoment aufzubringen hat, falls infolge eines Lastwechsels Bremsschlupf an den Antriebsrädern 4, 5 auftritt.

**Patentansprüche**

1. Verfahren zur Regelung des Antriebsmomentes nach einem Lastwechsel bei Hybridfahrzeugen, bei dem auf das Antriebsmoment bei einem Lastwechsel Einfluss genommen wird, indem einem aus dem Lastwechsel resultierenden Bremsschlupf an den Antriebsrädern (4, 5) des Hybridfahrzeuges bereits in der Phase seiner Entstehung entgegengewirkt wird, derart, dass eine Auswirkung auf die Seitenführung und damit auf die Stabilität des Hybridfahrzeuges beim Fahren ausgeschaltet wird, wobei beim Auftreten eines Bremsschlupfes an den Antriebsrädern (4, 5) infolge eines Lastwechsels ein möglichst hoher Anteil des Antriebsmoments dieser Antriebsräder über den oder die Elektromotoren (2) des Hybridfahrzeuges aufgebracht wird.

2. Verfahren nach Anspruch 1, wobei nach Detektierung von Bremsschlupf nach einem Lastwechsel das Soll-Antriebsmoment $M_{MSR}^x$ errechnet und dieses einer Antriebssteuerung (11) vorgegeben wird, in der durch einen Algorithmus für die Betriebsstrategie das Sollmoment $M_{VM}^x$ für den Verbrennungsmotor (1) und das Sollmoment $M_{EM}^x$ für den oder die Elektromotoren (2) bestimmt wird und die das Sollmoment $M_{EM}^x$ des oder der Elektromotoren (2) gleich dem Soll-Antriebsmoment $M_{MSR}^x$ setzt, wenn das Soll-Antriebsmoment $M_{MSR}^x$ kleiner oder gleich dem im aktuellen Betriebspunkt maximal möglichen Antriebsmoment $M_{EM\_Max}$ des oder der Elektromotoren (2) ist.

3. Verfahren nach Anspruch 2, wobei das Sollmoment $M_{EM}^x$ des oder der Elektromotoren (2) gleich dem Soll-Antriebsmoment $M_{MSR}^x$ gesetzt wird, wenn eine Abfragung des Ladezustandes der Batterie ergeben hat, dass diese ausreichend geladen ist.

4. Verfahren nach Anspruch 3, wobei bei Nichterfüllung der Bedingung, wonach das Soll-Antriebsmoment $M_{MSR}^x$ kleiner oder gleich dem im aktuellen Betriebspunkt maximal möglichen Antriebsmoment $M_{EM\_Max}$ des oder der Elektromotoren (2) ist, durch den Verbrennungsmotor (1) der Anteil des Antriebsmomentes aufgebracht wird, der über das maximal mögliche Antriebsmoment $M_{EM\_Max}$ des oder der Elektromotoren (2) hinausgeht.

5. Verfahren nach Anspruch 4, wobei zum Aufbringen des Anteiles des Antriebsmomentes durch den Verbrennungsmotor (1), der über das maximal mögliche Antriebsmoment $M_{EM\_Max}$ des oder der Elektromotoren (2) hinausgeht, der oder die Elektromotoren (2) derart angesteuert werden, dass das diesen zugeordnete Sollmoment $M_{EM}^x$ gleich dem im aktuellen Betriebspunkt maximal möglichen Antriebsmoment $M_{EM\_Max}$ des oder der Elektromotoren (2) ist, während der Verbrennungsmotor (1) derart angesteuert wird, dass das diesem zugeordnete Sollmoment $M_{VM}^x$ gleich dem Soll-Antriebsmoment $M_{MSR}^x$ abzüglich dem im aktuellen Betriebspunkt maximal möglichen Antriebsmoment $M_{EM\_Max}$ des oder der Elektromotoren (2) ist.

6. Verfahren nach Anspruch 5, wobei bei Beginn des Lastwechsels der oder die Elektromotoren (2) voll erregt werden, indem ihr Vorhaltewert $M_{EMVor}^x$ gleich dem im aktuellen Betriebspunkt maximal möglichen Antriebsmoment $M_{EM\_Max}$ des oder der Elektromotoren (2) gesetzt wird.

7. Verfahren nach Anspruch 2, wobei die Detektierung von Bremsschlupf auf der Grundlage von Informationen erfolgt, die aus den den Geschwindigkeiten der Antriebsräder (4, 5) zugeordneten Signalen $n_{Rad-links}$ und $n_{Rad-rechts}$ resultieren.

8. Verfahren nach einem oder mehreren der Ansprüche 1 bis 7, wobei das Verfahren zum Aufbringen des Antriebsmomentes bei einem Lastwechsel sowohl bei Hybridfahrzeugen mit Zweiradantrieb als auch bei Hybridfahrzeugen mit Allradantrieb durchgeführt wird.

9. Einrichtung zur Durchführung des Verfahrens nach Anspruch 1 bis 8, wobei jedem der Antriebsräder (4, 5) ein die Geschwindigkeit der Antriebsräder (4, 5) erfassender Raddrehzahlsensor (8, 9) zugeordnet ist, wobei die Raddrehzahlsensoren (8, 9) mit einer Radregelung (10) derart in Wirkverbindung stehen, dass durch diese nach einem Lastwechsel Bremsschlupf detektierbar ist, wenn die Radregelung (10) über von den Raddrehzahlsensoren (8, 9) erzeugte Signale $n_{Rad-links}$ und $n_{Rad-rechts}$ Informationen über einen Bremsschlupf erhält, wobei durch die Radregelung (10) das Soll-Antriebsmoment $M_{MSR}^x$ des Hybridfahrzeuges errechenbar ist, das sie einer Antriebssteuerung (11) vorgibt, in der durch einen Algorithmus für die Betriebsstrategie sowohl das Sollmoment $M_{VM}^x$ für den Verbrennungsmotor (1) als auch das Sollmoment $M_{EM}^x$ für den oder die Elektromotoren (2) bestimmbar ist, wobei beim Auftreten eines Bremsschlupfes an den Antriebsrädern infolge eines Lastwechsels ein möglichst hoher Anteil des Antriebsmoments dieser Antriebsräder über den oder die Elektromoren des Hybridfahrzeuges aufgebracht wird.

10. Einrichtung nach Anspruch 9, wobei durch die Antriebssteuerung (11) nach Abfragung des Ladezustandes der Batterie und ermitteltem ausreichenden Ladezustand das Sollmoment $M_{EM}^x$ des oder der Elektromotoren (2) gleich dem Soll-Antriebsmoment $M_{MSR}^x$ setzbar ist, wenn

$$M_{MSR}^x \leq M_{EM\_Max}$$

ist, wobei $M_{EM\_Max}$ das im aktuellen Betriebspunkt maximal mögliche Antriebsmoment des oder der Elektromotoren (2) ist.

**11.** Einrichtung nach Anspruch 10, wobei durch die Antriebssteuerung (11) der oder die Elektromotoren (2) derart ansteuerbar sind, dass ihr Sollmoment $M_{EM}{}^x$ gleich dem im aktuellen Betriebspunkt maximal möglichen Antriebsmoment $M_{EM\_Max}$ ist und der Verbrennungsmotor (1) derart ansteuerbar ist, dass sein Sollmoment

$$M_{VM}{}^x = M_{MSR}{}^x - M_{EM\_Max}$$

ist, wenn die Bedingung

$$M_{MSR}{}^x \leq M_{EM\_Max}$$

nicht erfüllt ist.

**12.** Einrichtung nach Anspruch 10 und 11, wobei der oder die Elektromotoren (2) zu Beginn eines Lastwechsels voll erregbar sind, indem ihr Vorhaltewert

$$M_{EMVor}{}^x = M_{EM\_Max}$$

setzbar ist.

**Claims**

**1.** Method for regulating the drive torque after a load change in hybrid vehicles in which, when there is a load change, the drive torque is influenced in that brake slip, which results from the load change, at the driven wheels (4, 5) of the hybrid vehicle is already counteracted in its generation phase in such a way that an effect on the lateral guidance and thus on the stability of the hybrid vehicle during driving is prevented, wherein, when brake slip occurs at the driven wheels (4, 5) owing to a load change, the highest possible proportion of the drive torque of these driven wheels is applied by means of the electric motor or motors (2) of the hybrid vehicle.

**2.** Method according to Claim 1, wherein, after a brake slip is detected after a load change, the setpoint drive torque $M_{MSR}{}^x$ is calculated and this is predefined to a drive controller (11) in which the setpoint torque $M_{VM}{}^x$ for the internal combustion engine (1) and the setpoint torque $M_{EM}{}^x$ for the electric motor or motors (2) are determined by means of an algorithm for the operating strategy, and which drive controller (11) sets the setpoint torque $M_{EM}{}^x$ of the electric motor or motors (2) to be equal to the setpoint drive torque $M_{MSR}{}^x$ if the setpoint drive torque $M_{MSR}{}^x$ is less than or equal to the maximum possible drive torque $M_{EM\_Max}$ of the electric motor or motors (2) at the current operating point.

**3.** Method according to Claim 2, wherein the setpoint torque $M_{EM}{}^x$ of the electric motor or motors (2) is set to be equal to the setpoint drive torque $M_{MSR}{}^x$ if an interrogation of the state of charge of the battery has revealed that the battery is sufficiently charged.

**4.** Method according to Claim 3, wherein, when the condition according to which the setpoint drive torque $M_{MSR}{}^x$ is less than or equal to the maximum possible drive torque $M_{EM\_Max}$ of the electric motor or motors (2) at the current operating point is not fulfilled, the internal combustion engine (1) applies the proportion of the drive torque which exceeds the maximum possible drive torque $M_{EM\_Max}$ of the electric motor or motors (2).

**5.** Method according to Claim 4, wherein, for the internal combustion engine (1) to apply the proportion of the drive torque which exceeds the maximum possible drive torque $M_{EM\_Max}$ of the electric motor or motors (2), the electric motor or motors (2) are actuated in such a way that the setpoint torque $M_{EM}{}^x$ which is assigned to them is equal to the maximum possible drive torque $M_{EM\_Max}$ of the electric motor or motors (2) at the current operating point, while the internal combustion engine (1) is actuated in such a way that the setpoint torque $M_{VM}{}^x$ which is assigned to it is equal to the setpoint drive torque $M_{MSR}{}^x$ minus the maximum possible drive torque $M_{EM\_Max}$ of the electric motor or motors (2) at the current operating point.

**6.** Method according to Claim 5, wherein, at the start of the load change, the electric motor or motors (2) are fully excited by the derivative action value $M_{EMVor}{}^x$ being set to be equal to the maximum possible drive torque $M_{EM\_Max}$ of the electric motor or motors (2) at the current operating point.

**7.** Method according to Claim 2, wherein brake slip is detected on the basis of information which results from the signals $n_{Rad-links}$ and $n_{Rad-rechts}$ which are assigned to the speeds of the driven wheels (4, 5).

**8.** Method according to one of more of Claims 1 to 7, wherein the method for applying the drive torque when there is a load change is carried out both in hybrid vehicles with two-wheel drive and in hybrid vehicles with all-wheel drive.

**9.** Device for carrying out the method according to Claims 1 to 8, wherein each of the driven wheels (4, 5) is assigned a wheel speed sensor (8, 9) which senses the speed of the driven wheels (4, 5), the wheel speed sensors (8, 9) being operatively connected to a wheel regulator (10) in such a way that after a load change said wheel regulator (10) can detect brake slip if the wheel regulator (10) receives information about brake slip by means of signals $n_{Rad-links}$ and $n_{Rad-rechts}$ which are generated by the wheel speed sensors (8, 9), wherein the wheel regulator (10) can calculate the setpoint drive torque $M_{MSR}^x$ of the hybrid vehicle which it predefines to a drive controller (11) in which both the setpoint torque $M_{VM}^x$ for the internal combustion engine (1) and the setpoint torque $M_{EM}^x$ for the electric motor or motors (2) can be determined by means of an algorithm for the operating strategy, wherein, when brake slip occurs at the driven wheels owing to a load change, the highest possible proportion of the drive torque of these driven wheels is applied via the electric motor or motors of the hybrid vehicle.

10. Device according to Claim 9, wherein, after the state of charge of the battery has been interrogated and a sufficient state of charge has been determined, the drive controller (11) can set the setpoint torque $M_{EM}^x$ of the electric motor or motors (2) to be equal to the setpoint drive torque $M_{MSR}^x$ if

$$M_{MSR}^x \leq M_{EM\_Max}$$

where $M_{EM\_Max}$ is the maximum possible drive torque of the electric motor or motors (2) at the current operating point.

11. Device according to Claim 10, wherein the drive controller (11) can actuate the electric motor or motors (2) in such a way that their setpoint torque $M_{EM}^x$ is equal to the maximum possible drive torque $M_{EM\_Max}$ at the current operating point and the internal combustion engine (1) can be actuated in such a way that its setpoint torque is

$$M_{VM}^x = M_{MSR}^x - M_{EM\_Max}$$

if the conditions

$$M_{MSR}^x \leq M_{EM\_Max}$$

is not fulfilled.

12. Device according to Claims 10 and 11, wherein the electric motor or motors (2) can be fully excited at the start of a load change by virtue of the fact that its derivative action value

$$M_{EMVor}^x = M_{EM\_Max}$$

can be set.

**Revendications**

1. Procédé de régulation du couple d'entraînement après un changement de charge sur des véhicules hybrides, dans lequel une influence est exercée sur le couple d'entraînement par un changement de charge, du fait qu'une réaction au glissement au freinage résultant du changement de charge sur les roues motrices (4, 5) du véhicule hybride, dès la phase où il se produit a lieu de façon qu'une répercussion sur le guidage latéral et donc sur la stabilité du véhicule hybride pendant la marche est exclue, **caractérisé en ce que**
   lorsqu'un glissement au freinage se produit sur les roues motrices (4, 5) suite à un changement de charge, une partie aussi élevée que possible du couple d'entraînement de ces roues motrices est amenée par le ou les moteurs électriques (2) du véhicule hybride.

2. Procédé selon la revendication 1, **caractérisé en ce que**
   après détection d'un glissement au freinage après un changement de charge, le couple d'entraînement théorique $M_{MSR}^x$ est calculé et transmis à une commande d'entraînement (11), dans laquelle, au moyen d'un algorithme pour la stratégie de fonctionnement, le couple d'entraînement théorique $M_{VM}^x$ pour le moteur à combustion interne (1) et le couple d'entraînement théorique $M_{EM}^x$ pour le ou les moteurs électriques (2) sont déterminés, et il rend le couple d'entraînement théorique $M_{EM}^x$ du ou des moteurs électriques (2) égal au couple d'entraînement théorique $M_{MSR}^x$ lorsque le couple d'entraînement théorique $M_{MSR}^x$ est inférieur ou égal au couple d'entraînement $M_{EM\_Max}$ possible au maximum au point de fonctionnement actuel du ou des moteurs électriques (2).

3. Procédé selon la revendication 2, **caractérisé en ce que**
   le couple d'entraînement théorique $M_{EM}^x$ du ou des moteurs électriques (2) est rendu égal au couple d'entraînement théorique $M_{MSR}^x$ lorsqu'une interrogation de l'état de charge de la batterie a indiqué que celle-ci est suffisamment chargée.

4. Procédé selon la revendication 3, **caractérisé en ce que**
   si la condition n'est pas remplie selon laquelle le couple d'entraînement théorique $M_{MSR}^x$ est inférieur ou égal au couple d'entraînement $M_{EM\_Max}$ possible au maximum au point de fonctionnement actuel du ou des moteurs électriques (2), le moteur à combustion interne (1) amène la partie du couple d'entraînement qui dépasse le couple d'entraînement $M_{EM\_Max}$ possible au maximum du ou des moteurs électriques (2).

**5.** Procédé selon la revendication 4,
**caractérisé en ce que**
pour amener par le moteur à combustion interne (1) la partie du couple d'entraînement qui dépasse le couple d'entraînement $M_{EM\_Max}$ possible au maximum du ou des moteurs électriques (2), le ou les moteurs électriques (2) sont commandés de façon que le couple d'entraînement théorique $M_{EM}{}^x$ qui leur est attribué soit égal au couple d'entraînement $M_{EM\_Max}$ possible au maximum au point de fonctionnement actuel du ou des moteurs électriques (2), tandis que le moteur à combustion interne (1) est commandé de façon que le couple d'entraînement théorique $M_{VM}{}^x$ qui lui est attribué soit égal au couple d'entraînement théorique $M_{MSR}{}^x$ moins le couple d'entraînement $M_{EM\_Max}$ possible au maximum au point de fonctionnement actuel du ou des moteurs électriques (2).

**6.** Procédé selon la revendication 5,
**caractérisé en ce que**
au début du changement de charge du ou des moteurs électriques (2), ceux-ci (2) sont totalement excités, leur valeur de réserve $M_{EMVor}{}^x$ étant égale au couple d'entraînement $M_{EM\_Max}$ possible au maximum au point de fonctionnement actuel du ou des moteurs électriques (2).

**7.** Procédé selon la revendication 2,
**caractérisé en ce que**
la détection du glissement au freinage a lieu sur la base des informations qui résultent des signaux $n_{roue\text{-}gauche}$ et $n_{roue}$ droite associés aux vitesses des roues motrices (4, 5).

**8.** Procédé selon une ou plusieurs des revendications 1 à 7,
**caractérisé en ce que**
le procédé d'amenée du couple d'entraînement en cas d'un changement de charge sur des véhicules hybrides à deux roues motrices est réalisé aussi sur des véhicules hybrides toutes roues motrices.

**9.** Dispositif de réalisation du procédé selon les revendications 1 à 8,
**caractérisé en ce que**
un capteur de vitesse de roue (8, 9) captant la vitesse des roues motrices (4, 5) est associé à chacune des roues motrices (4, 5), les capteurs de vitesse des roues (8, 9) étant en liaison active avec un système de régulation des roues (10) de façon qu'au moyen de ceux-ci, un glissement au freinage après un changement de charge soit détecté lorsque le système de régulation des roues (10) reçoit, au moyen de signaux $n_{roue\text{-}gauche}$ et $n$roue droite produits par les capteurs de vitesse des roues (8, 9), des informations sur un glissement au freinage, et le système de régulation des roues (10) calcule le couple d'entraînement théorique $M_{MSR}{}^x$ du véhicule hybride qu'il transmet à une commande d'entraînement (11) dans laquelle, au moyen d'un algorithme pour la stratégie de fonctionnement, aussi bien le couple d'entraînement théorique $M_{VM}{}^x$ pour le moteur à combustion interne (1) que le couple d'entraînement théorique $M_{EM}{}^x$ pour le ou les moteurs électriques (2) sont déterminés, de sorte que, lorsqu'un glissement au freinage se produit sur les roues motrices par suite d'un changement de charge, une partie aussi élevée que possible du couple d'entraînement de ces roues motrices est amenée par le ou les moteurs électriques du véhicule hybride.

**10.** Dispositif selon la revendication 9,
**caractérisé en ce que**
la commande d'entraînement (11), après interrogation de l'état de charge de la batterie et l'état de charge suffisant étant déterminé, rend le couple d'entraînement théorique $M_{EM}{}^x$ du ou des moteurs électriques (2) égal au couple d'entraînement théorique $M_{MSR}{}^x$, lorsque

$$M_{MSR}{}^x \leq M_{EM\_MAX}$$

$M_{EM\_MAX}$ étant le couple d'entraînement possible au maximum au point de fonctionnement actuel du ou des moteurs électriques (2).

**11.** Dispositif selon la revendication 10,
**caractérisé en ce que**
le ou les moteurs électriques (2) sont commandés par la commande d'entraînement (11) de façon que leur couple d'entraînement théorique $M_{EM}{}^x$ soit égal au couple d'entraînement $M_{EM\_MAX}$ possible au maximum au point de fonctionnement actuel et le moteur à combustion interne (1) est commandé de façon que son couple d'entraînement théorique soit

$$M_{VM}{}^x = M_{MSR}{}^x - M_{EM\_MAX}$$

lorsque la condition

$$M_{MSR}x \leq M_{EM\_MAX}$$

n'est pas remplie.

**12.** Dispositif selon les revendications 10 et 11,
**caractérisé en ce que**
le ou les moteurs électriques (2) sont totalement excités au début d'un changement de charge, leur valeur de réserve pouvant s'établir à

$$M_{EMVor}{}^{x} = M_{EM\_MAX}$$